Europäisches Patentamt

European Patent Office

Office européen des brevets

(11) Veröffentlichungsnummer: **0 509 111 A1**

## (12) EUROPÄISCHE PATENTANMELDUNG

(21) Anmeldenummer: **91106059.8**

(22) Anmeldetag: **16.04.91**

(51) Int. Cl.5: **B01D 53/26**

(43) Veröffentlichungstag der Anmeldung:
**21.10.92 Patentblatt 92/43**

(84) Benannte Vertragsstaaten:
**AT BE CH DE DK ES FR GB GR IT LI LU NL SE**

(71) Anmelder: **KWW GmbH**
**Heerdter Lohweg 63-71**
**W-4000 Düsseldorf 11(DE)**

(72) Erfinder: **Laumen, Michael**
**Windfang 2**
**O-2602 Krakow am See(DE)**

(74) Vertreter: **KUHNEN, WACKER & PARTNER**
**Alois-Steinecker-Strasse 22 Postfach 1553**
**W-8050 Freising(DE)**

(54) **Wärmetauscher für die Entfeuchtung von Druckluft sowie damit ausgerüsteter Drucklufttrockner.**

(57) Wärmetauscher, bei denen zumindest auf der wärmeabgebenden Seite oder der wärmeaufnehmenden Seite die Wärmetauscherfläche in Form der inneren Oberfläche eines Sintermaterials bereitgestellt wird, zeichnen sich durch sehr hohe Wärmeübertragungsleistungen aus. Nachteilig hierbei ist jedoch der vergleichsweise hohe Strömungswiderstand des Sintermaterials.

Die Erfindung stellt einen Wärmetauscher bereit, der insbesndere für die Entfeuchtung von Druckluft geeignet ist, der ohne wesentliche Einbuße bei der Wärmeübertragungsleistung einen geringeren Druckabfall als herkömmliche Sintermetallwärmetauscher aufweist. Der Wärmetauscher weist eine Sintermatrix auf, deren Korngröße über 1,5 mm und vorzugsweise im Bereich zwischen 1,6 und 2,0 mm liegt. In diesem Korngrößenbereich liegt der Druckverlust im Bereich akzeptabler Werte, während gleichzeitig die Wärmeübertragungsleistungen im Vergleich zu Korngrößen unter 1,5 mm nur unwesentlich verkleinert sind.

Fig. 5

Die vorliegende Erfindung betrifft einen Wärmetauscher nach dem Oberbegriff des Anspruchs 1 sowie einen damit ausgerüsteten Drucklufttrockner nach Anspruch 6.

Drucklufttrockner haben die Aufgabe, den in der Druckluft enthaltenen Wasserdampf zu entfernen, um Schäden durch Kondensat im Verteilnetz oder in den angeschlossenen Apparaten oder druckluftbeschlagten Produkten zu vermeiden.

Der sogenannte Druck-Taupunkt kennzeichnet den auf der Austrittsseite des Trockners vorliegenden Rest Wasserdampfanteil. Für Taupunkte bis 0°C sind sogenannte Kältetrockner-Anlagen üblich, wie sie beispielsweise aus der DE-OS-38 27 005 bekannt sind.

Hierbei wird unter Zuhilfenahme einer Kältemaschine - in der Regel einer Kompressionskältemaschine - der aus dem Druckluftkompressor ausströmende Luftstrom möglichst nahe an 0°C abgekühlt, so daß ein Maximum an Wasser an der kalten Wärmetauscherfläche eines sogenannten Kühlers kondensiert, ohne das es zur Vereisung kommt.

Nach Abkühlung muß der dann zweiphasige Massenstrom bestehend aus Druckluft und kondensiertem Wasser in einen Abscheider geleitet werden, um Kondensat und Luftstrom zu trennen. Um in Hinblick auf die Betriebskosten für die Kältemaschine zu einem möglichst wirtschaftlichen Betrieb zu gelangen, wird dem Kühler üblicherweise ein Rekuperator vorgeschaltet mit dem der aus dem Druckluftkompressor austretende Druckluftstrom durch inneren Wärmetausch mit dem getrockneten Druckluftsstrom vorgekühlt wird. Dadurch reduziert sich die benötigte Gesamtkälteleistung um ca. 50 %. Ein Druckluft-Kältetrockner umfaßt somit drei Komponenten, nämlich Kühler, Rekuperator und Abscheider.

Ein weiteres wichtiges Kriterium in Hinsicht auf die Wirtschaftlichkeit eines Trockners ist der bei der Kühlung und Phasentrennung entstehende Druckabfall. Aus der genannten DE-OS-38 27 005 ist es bekannt, Wärmetauscher für Drucklufttrockner aus porösen, durchströmbaren Bauelementen zu fertigen, die vorzugsweise aus versintertem Aluminiumgranulat einer Korngröße von 10 - 1500 $\mu$m bestehen. Ein Nachteil dieser bekannten Wärmetauscher besteht darin, das der Druckabfall in dem porösen Sintermetall vergleichsweise hoch ist. In wirtschaftlicher Hinsicht werden diese hohen Druckverluste durch die extrem hohen Wärmeübertragungsleistungen derartiger Wärmetauscher nur zum Teil ausgeglichen.

Aus der DE-OS-19 02 229 ist ein Wärmetauscher bekannt, der sowohl auf der Wärme abgebenden Seite als auch auf der Wärme aufnehmenden Seite eine durchströmbare Matrixanordnung aus Metallkugeln aufweist. Für die Dimensionierung der Metallkugeln wird folgende Abschätzung 1/6 CD < d < 1/2 CD angegeben. Hierbei ist d der Durchmesser der Metallkugeln, während CD eine charakteristische Abmessung des Wärmetauschers ist, beispielsweise der Abstand zwischen zwei benachbarten Wärmetauscherplatten. Aufgrund der erhöhten Porosität weist ein derartiger Wärmetauscher bei gleicher durchströmter Länge einen geringeren Druckverlust auf als Wärmetauscher wie sie aus der DE-OS-38 27 005 bekannt sind. Demgegenüber ist jedoch jedoch der Wärmeübergangskoefizient wesentlich schlechter als bei Wärmetauschern gemäß der DE-OS-38 27 005.

Ausgehend von der DE-OS-38 27 005 ist es Aufgabe der vorliegenden Erfindung einen Wärmetauscher für die Drucklufttrocknung sowie einen damit ausgerüsteten Druckluft-Kältetrockner zu schaffen, der ohne wesentliche Einbuße bei der Wärmeübertragungsleistung einen geringeren Druckabfall aufweist.

Die Lösung dieser Aufgabe erfolgt durch die Merkmale der Ansprüche 1 bzw. 6.

In einer Meßreihe wurden die K-Werte und die Druckverlustbeiwerte $\xi$ von mit Luft als Wärmetransportmedium beaufschlagten Wärmetauschern ermittelt, die auf Wärme abgebender Seite und auf Wärme aufnehmender Seite mit einer porösen, durchströmbaren Sintermatrix aus Aluminiumgranulat verfüllt waren. Die K-Werte und die Druckverlustbeiwerte $\xi$ von Wärmetauschern mit porösen durchströmbaren Sintermatrizen aus Aluminiumgranulat unterschiedlicher Korngröße im Bereich zwischen 1000 und 3000 $\mu$m wurden miteinander verglichen.

Dabei wurde überraschend festgestellt, daß sich der Widerstandsbeiwert $\xi$ in Korngrößenbereichen zwischen 1000 und 3000 $\mu$m nur unwesentlich ändert, während sich der Druckabfall $\Delta p$ umgekehrt proportional mit der Korngröße d ändert. Damit lassen sich mit erfindungsgemäßen Wärmetauschern bei gleicher Geometrie und gleichen Randbedingungen annähernd gleiche Wärmetransportleistungen bei allerdings erheblich kleineren Druckverlusten erzielen.

Empirisch wurde ermittelt, daß der Druckverlustbeiwert in diesem Korngrößenbereich annähernd konstant ist, so daß die Korngröße bei der Berechnung des Druckverlustes p annähernd proportional eingeht:

$$\Delta p = \xi * L/d * \zeta/2 * w_0^2$$

mit

| | |
|---|---|
| $\Delta p$ | = Druckabfall, |
| L | = durchströmte Länge, |
| d | = Korngröße, |
| $\zeta$ | = Dichte des Wärmetauscherfluids, und |
| $w_0$ | = mittlere Strömungsgeschwindigkeit. |

Praktisch bedeutet dies eine Halbierung des Druckverlustes bei verdoppelter Korngröße bei annähernd konstantem K-Wert. Bei einem beliebig anzusetzenden, gewünschten Gesamtdruckverlust läßt sich damit im Vergleich zum Stand der Technik eine Halbierung der eingesetzten Wärmetauscherfläche bzw. eine Verdopplung des Druckluftmassenstroms erreichen.

Vorteilhafte Weiterbildungen der Erfindung ergeben sich aus den Unteransprüchen 2 bis 5.

Ein mit derartigen Wärmetauschern ausgerüsteter Drucklufttrockner gemäß Anspruch 6 kann daher bei vorgegebenen Leistungsdaten wesentlich preisgünstiger hergestellt werden, als ein Drucklufttrockner nach dem Stand der Technik.

Darüber hinaus hat sich gezeigt, daß sich bei Verwendung eines erfindungsgemäßen Wärmetauschers das Größenspektrum der im Kühler entstehenden Kondensat- bzw. Nebeltropfen offensichtlich hin zu größeren Tropfendurchmessern verschiebt, was die Trennung des Zweiphasenstromes aus dem Kühler wesentlich vereinfacht. Es hat sich überraschend herausgestellt, daß ein herkömmlicher Flüssigkeitsabscheider mit Prallblechen, Lamellen, etc. nicht mehr notwendig ist, wenn durch eine dem Kühler nachgeschaltete Beruhigungsstrecke gewährleistet wird, daß die mittlere Strömungsgeschwindigkeit der Luft bzw. des Zweiphasenstromes unter 1 m/s gehalten wird (Anspruch 7).

Weitere Einzelheiten, Aspekte und Vorteile der vorliegenden Erfindung ergeben sich aus der nachfolgenden Beschreibung unter Bezugnahme auf die Zeichnung.

Es zeigt:

Fig. 1 den Druckverlustbeiwert $\xi$ als Funktion der Reynoldszahl $R_{ed}$ bzw. der mittleren Strömungsgeschwindigkeit $w_0$ für einen Wärmetauscher mit einer mittleren Korngröße von 0,9 mm,

Fig. 2 die zugehörigen K-Werte als Funktion der mittleren Strömungsgeschwindigkeit $w_0$,

Fig. 3 eine Fig. 1 entsprechende Darstellung für einen Wärmetauscher mit einer mittleren Korngröße von 1,8 mm,

Fig. 4 die zugehörige Darstellung der K-Werte als Funktion der mittleren Strömungsgeschwindigkeit, und

Fig. 5 ein Ausführungsbeispiel eines erfindungsgemäßen Drucklufttrockners, bei dem Rekuperator, Kühler und Flüssigkeitsabscheider in einem gemeinsamen Druckmantel integriert sind.

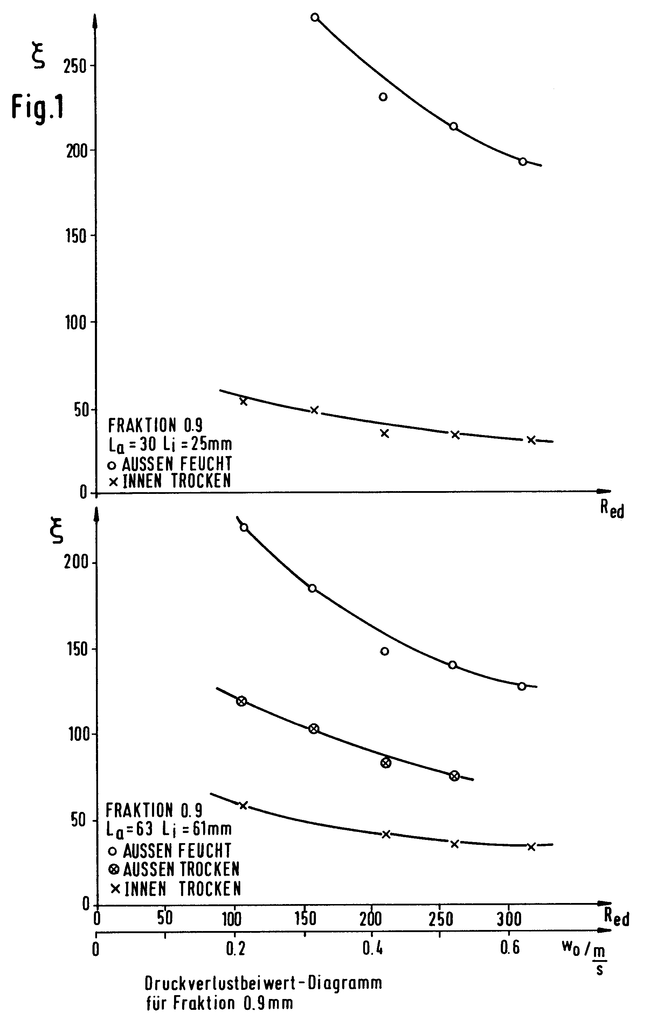

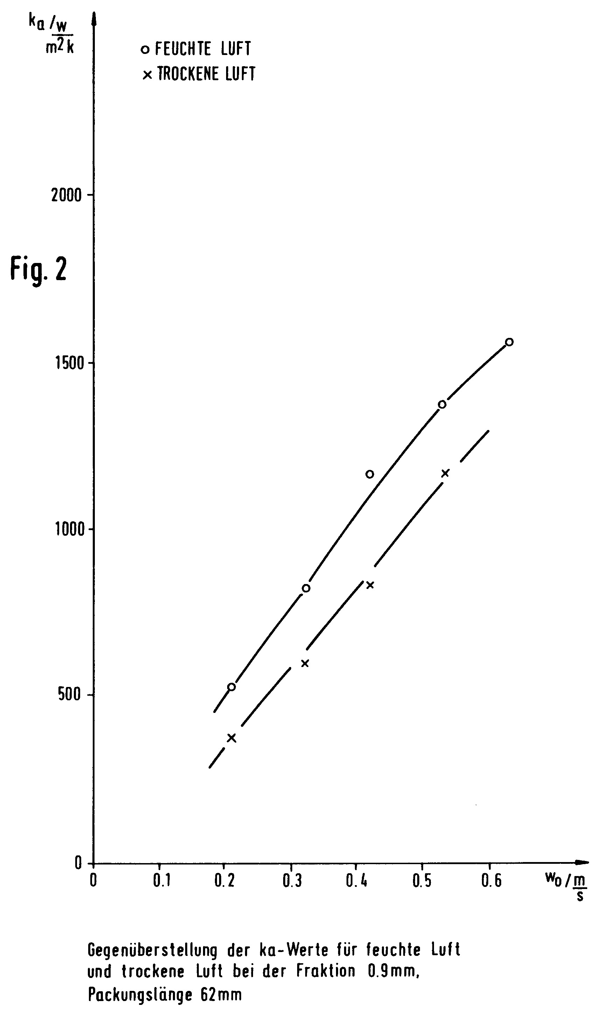

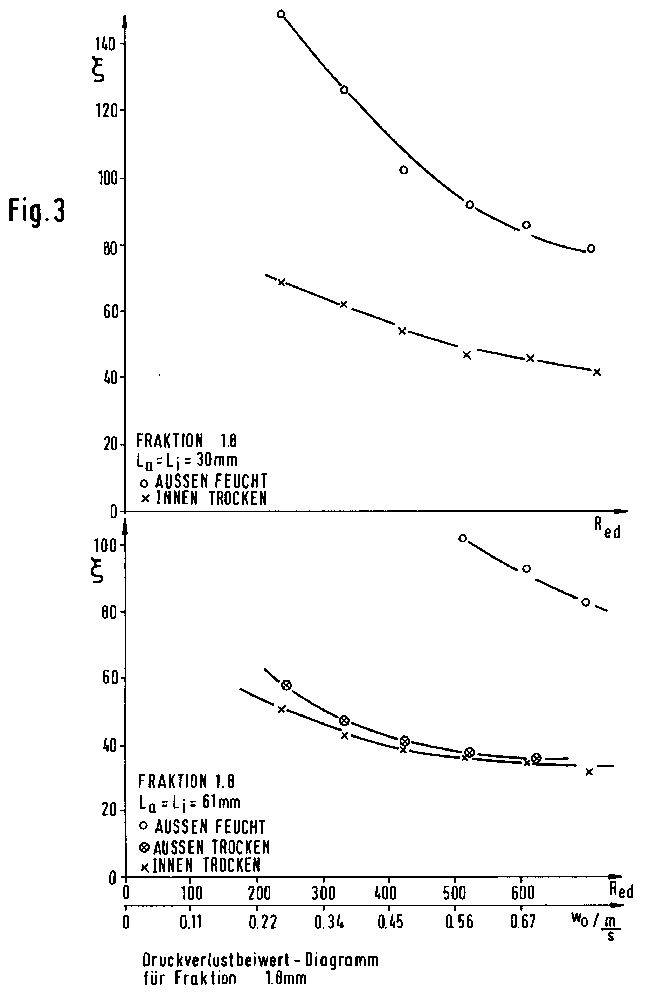

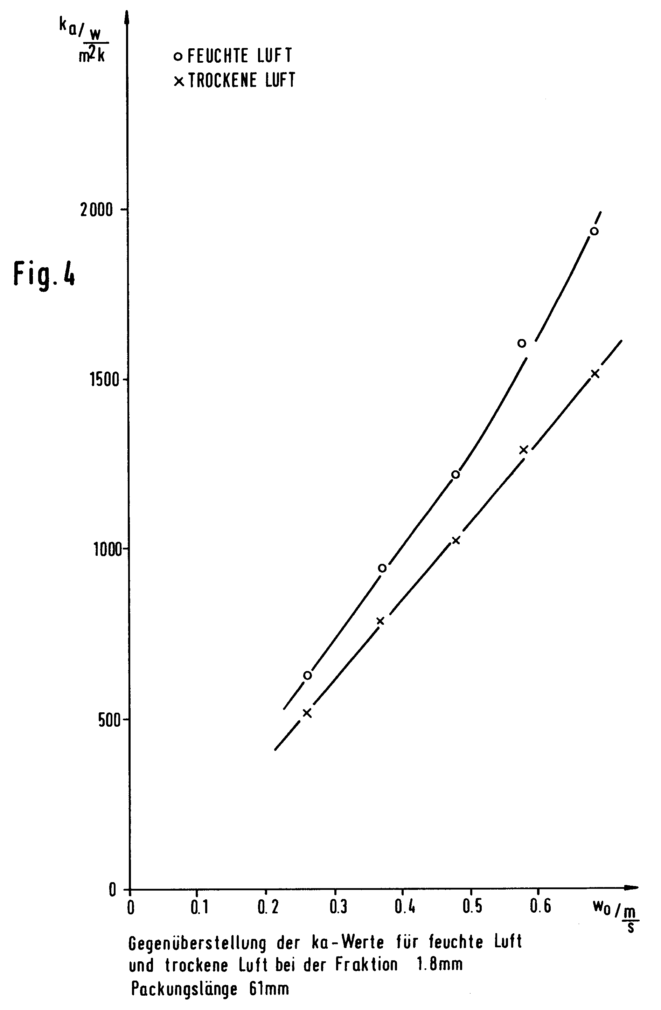

Die Wärmetauscher, deren Meßdaten in den Figuren 1 bis 4 wiedergegeben sind, bestehen aus zwei Strömungskanälen für wärmeabgebende und wärmeaufnehmende Seite und einer rohrförmigen Trennwand. Beide Strömungskanäle bzw. die wärmeaufnehmende und die wärmeabgebende Seite sind mit einer porösen, durchströmbaren Sintermatrix aus Aluminiumgranulat verfüllt. Der Wärmetauscher I, dessen Meßdaten in den Figuren 1 und 2 dargestellt sind, ist mit Sintermatrizen aus Granulat mit einer mittleren Korngröße von 0,9 mm und der Wärmetauscher II - Fig. 3 und 4 - ist mit Granulat einer mittleren Korngröße von 1,8 mm versehen.

Wie aus einem Vergleich der Fig. 3 und 4 zu ersehen ist, wurden bei der Beaufschlagung der Wärmetauscher I und II mit trockner und feuchter Luft annähernd identische K-Werte gemessen, obwohl der Wärmetauscher I eine annähernd doppelt so große innere Oberfläche (43,3 cm$^2$/cm$^3$) aufweist, als der Wärmetauscher II.

Wie aus den Fig. 1 und 2 zu ersehen ist, ist auch der Druckverlustbeiwert $\xi$ bei beiden Wärmetauschern in etwa konstant, so daß sich der oben angegebene lineare Zusammenhang zwischen Druckverlust $\Delta p$ und durchströmter Packungslänge der Sintermatrix ergibt.

Bei Einsatz derartiger Sintermetall-Wärmetauscher in Drucklufttrocknern lassen sich damit wesentlich wirtschaftlichere Drucklufttrockner realisieren.

Es hat sich auch herausgestellt, daß die bei der Verwendung von Aluminiumgranulat notwendige bzw. gewünschte Oberflächenvergütung zu einer kaum meßbaren Verschlechterung der Wärmeübertragungsleistungen führt. Der Korrosionsschutz kann mit herkömmlichen Methoden wie z. B. GS-Anodisierung, Gelbchromatierung etc. erreicht werden. Sofern der Einsatz von ölfreien Kompressoren vermieden wird, könnte sogar gänzlich auf einen herkömmlichen Korrosionsschutz verzichtet werden, da die Sinterpartikel von einem Ölfilm überzogen werden, der als Korrosionsschutz wirkt.

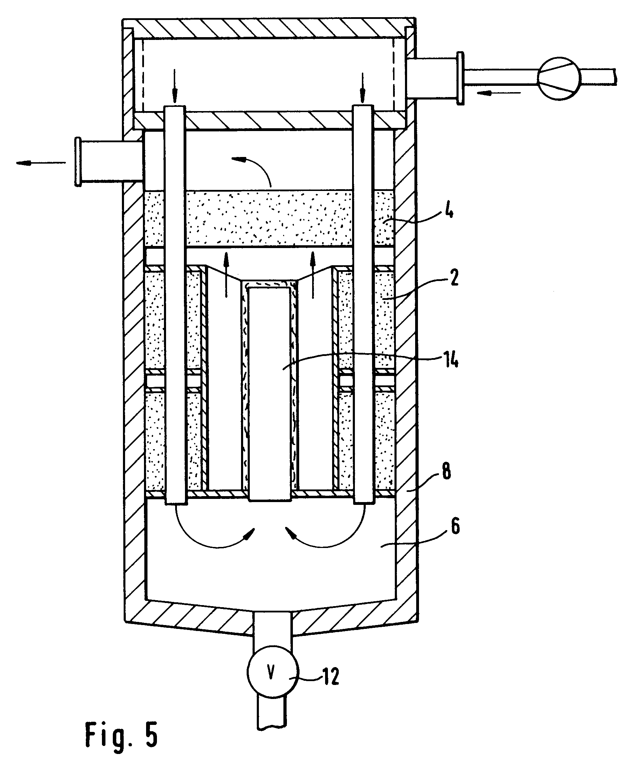

In Fig. 5 ist eine bevorzugte Ausführungsform eines Drucklufttrockners dargestellt, bei dem ein Kühler 2, ein Rekuperator 4 und ein Flüssigkeitsabscheider 6 in einem gemeinsamen Druckmantel 8 angeordnet sind. Dieser Drucklufttrockner ist abgesehen von der Ausgestaltung des Flüssigkeitsabscheiders 6 identisch mit der Ausführungsform nach Abbildung 5 der DE-OS 38 27 005. Auf die detaillierte Beschreibung des Drucklufttrockners nach Abbildung 5 in der DE-OS-38 27 005 wird daher vollinhaltlich Bezug genommen. Im Nachfolgenden wird lediglich auf die Unterschiede eingegangen.

Auf ein separates Bauteil Flüssigkeitsabscheider, wie es in der DE-OS 38 27 005 beschrieben ist, kann verzichtet werden, wenn der Flüssigkeitsabscheider 6 als eine dem Kühler nachgeschaltete Beruhigungsstrecke ausgebildet ist, die so dimensioniert wird, daß die mittlere Strömungsgeschwindigkeit darin auf unter 1 m/s sinkt. Bei derartig niedrigen Strömmungsgeschwindigkeiten werden die feinen Kondensattröpfchen nicht mehr durch den Luftstrom mitgerissen. Dies ist vermutlich darauf zurüchzuführen, das durch die grobporigeren Sintermatrizen das Größenspektrum der Kondensattröpfchen zu größeren Durchmessern hin verschoben wird. Das Kondensat sammelt sich dann im unteren Bereich der Beruhigungsstrecke 6 und kann über ein Ventil 12 dem Druckmantel entfernt werden, während die trockene Druckluft über eine Filtereinrichtung 14 dem Rekuperator 4 zugeführt wird.

Hinsichtlich weitere konkreter Ausgestaltungen der erfindungsgemäßen Drucklufttrockner wird auf die einzelnen Ausführungsformen gemäß der DE-OS-39 27 005 verwiesen. Auf die jeweilige zugehörige Beschreibung wird hiermit vollinhaltlich Bezug genommen.

## Patentansprüche

1. Wärmetauscher zur Entfeuchtung von Druckluft mit einer Wärme abgebenden Seite und einer Wärme aufnehmenden Seite, die durch eine gemeinsame Wärmetauscherwand voneinander getrennt sind und die jeweils einen Strömungskanal für Fluide aufweisen zwischen den Wärme ausgetauscht wird, und wobei der Strömungskanal der Wärme abgebenden Seite und/oder der Wärme aufnehmenden Seite zumindest in Teilstrecken mit einer porösen durchströmbaren Sintermatrix mit Partikeln aus gut wärmeleitendem Material verfüllt ist, die in gut wärmeleitendem Kontakt mit der Wärmetauscherwand steht, **dadurch gekennzeichnet,**

   daß die Korngröße der Sintermatrix im Bereich über 1,5 mm und vorzugsweise im Bereich zwischen 1,6 und 2,0 mm liegt.

2. Wärmetauscher nach Anspruch 1, dadurch gekennzeichnet, daß die Sintermatrix aus Aluminiumgranulat besteht.

3. Wärmetauscher nach wenigstens einem der vorhergehenden Ansprüche, dadurch gekennzeichnet, daß die Wärme abgebende Seite und/oder die Wärme aufnehmende Seite eine Mehrzahl von Strömungskanälen aufweisen.

4. Wärmetauscher nach wenigstens einem der vorhergehenden Ansprüche, dadurch gekennzeichnet, daß ineinanderliegende Rohre die Strömungskanäle festlegen.

5. Wärmetauscher nach wenigstens einem der vorhergehenden Ansprüche, dadurch gekennzeichnet, daß die Sintermatrix bzw. die Oberfläche der Sinterpartikel nach einem herkömmlichen Verfahren, wie z. B. Gelbchromatierung, gegen Korrosion geschützt ist.

6. Drucklufttrockner zur Entfeuchtung von Druckluft mit einem Kühler (2), einem Rekuperator (4) und einem Flüssigkeitsabscheider (6), **dadurch gekennzeichnet,** daß der Kühler (2) als Wärmetauscher nach einem der vorhergehenden Ansprüche ausgebildet ist, und/oder daß der Rekuperator (4) ein entsprechend ausgelegter Wärmetauscher nach einem der vorhergehenden Ansprüche ist.

7. Druckluft-Kältetrockner nach Anspruch 6, dadurch gekennzeichnet, daß Kühler (2), Rekuperator (4) und Flüssigkeitsabscheider (6) in einem gemeinsamen Gehäuse (8) integriert sind, wobei der Flüssigkeitsabscheider (6) als eine dem Kühler (2) nachgeschaltete Beruhigungsstrecke ausgebildet ist, die so dimensioniert ist, daß die Strömmungsgesschwindigkeit der Druckluft darin unter 1 m/s sinkt.

Fig.1

FRAKTION 0.9
$L_a = 30$ $L_i = 25$mm
○ AUSSEN FEUCHT
× INNEN TROCKEN

FRAKTION 0.9
$L_a = 63$ $L_i = 61$mm
○ AUSSEN FEUCHT
⊗ AUSSEN TROCKEN
× INNEN TROCKEN

Druckverlustbeiwert-Diagramm
für Fraktion 0.9mm

Gegenüberstellung der ka-Werte für feuchte Luft
und trockene Luft bei der Fraktion 0.9mm,
Packungslänge 62mm

Fig.3

FRAKTION 1.8
$L_a = L_i = 30mm$
o AUSSEN FEUCHT
× INNEN TROCKEN

FRAKTION 1.8
$L_a = L_i = 61mm$
o AUSSEN FEUCHT
⊗ AUSSEN TROCKEN
× INNEN TROCKEN

Druckverlustbeiwert - Diagramm
für Fraktion 1.8mm

**Fig. 4**

Gegenüberstellung der ka-Werte für feuchte Luft und trockene Luft bei der Fraktion 1.8mm Packungslänge 61mm

Fig. 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y,D | DE-A-3 827 005 (LAUMEN THERMOTECHNIK) * Spalte 2, Zeilen 16-20,58-67; Spalte 4, Zeilen 11-27,40-44; Spalte 7, Zeilen 22-65; Abbildung 5; Ansprüche 1-17 * --- | 1,2,4-6 | B 01 D 53/26 |
| Y | US-A-2 801 707 (ASKER) * Spalte 1, Zeilen 15-23; Spalte 3, Zeilen 43-57; Spalte 8, Zeilen 15-23 * --- | 1,2,4-6 | |
| Y | GB-A-1 208 314 (NORTON CO.) * Seite 1, Zeilen 40-45,66-72 * ----- | 1,2,4-6 | |

**RECHERCHIERTE SACHGEBIETE (Int. Cl.5)**

B 01 D

Der vorliegende Recherchenbericht wurde für alle Patentansprüche erstellt

| Recherchenort | Abschlußdatum der Recherche | Prüfer |
|---|---|---|
| DEN HAAG | 28-11-1991 | EIJKENBOOM A.F. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
........................................................................
& : Mitglied der gleichen Patentfamilie, übereinstimmendes
    Dokument

EPO FORM 1503 03.82 (P0403)